Europäisches Patentamt

European Patent Office

Office européen des brevets

(19)

(11) Publication number: **0 311 849 B1**

# EUROPEAN PATENT SPECIFICATION

(45) Date of publication of patent specification: **18.12.91**  (51) Int. Cl.5: **B62D 27/02**

(21) Application number: **88116114.5**

(22) Date of filing: **29.09.88**

(54) Lattice structure for a motor vehicle body.

(30) Priority: **30.09.87 IT 6783287**

(43) Date of publication of application:
**19.04.89 Bulletin 89/16**

(45) Publication of the grant of the patent:
**18.12.91 Bulletin 91/51**

(84) Designated Contracting States:
**DE ES FR GB NL SE**

(56) References cited:
**WO-A-86/00268**
**DE-C- 861 394**
**GB-A- 606 365**
**GB-A- 668 922**
**GB-A- 885 279**

(73) Proprietor: **IVECO FIAT S.p.A.**
**Via Puglia 35**
**I-10156 Torino(IT)**

(72) Inventor: **Messori, Pier Paolo**
**Via Roma, 5/1**
**I-10025 Pino Torinese(IT)**
Inventor: **Pfeifle, Roland**
**Milanweg, 1**
**W-7916 Nersingen(DE)**

(74) Representative: **Boggio, Luigi et al**
**STUDIO TORTA Società Semplice Via Viotti,**
**9**
**I-10121 Torino(IT)**

Rank Xerox (UK) Business Services

## Description

This invention relates to a lattice structure, particularly for a motor vehicle body.

Various types of motor vehicles, and in particular motor buses, are known to comprise a body having a load-bearing lattice structure with an outer cladding. This structure is formed from a plurality of beams welded together and generally consisting of conveniently closed metal sections of suitable cross-section. Known structures of this type have certain drawbacks. Firstly the nodal points, such as the points in which the longitudinal members are connected to an upright, must be formed by interrupting the structural continuity of one of the two beams, and in particular by butt-welding the ends of the interrupted beam, for example the upright, to opposing walls of the continuous beam, for example the longitudinal member. This means that the remaining walls of the continuous beam, which in this example are the vertical walls of the longitudinal member, must locally support the entire load acting on the interrupted beam. The result is that in order to prevent deformation of these walls the beams must be overdimensioned and the structure thus becomes heavy.

Moreover, as the various beams are subjected to loads of different intensities, they are normally formed from different types of sections which have to be cut to size and possibly machined at their ends to make them suitable for connection. This results in additional working costs, additional storage costs because of the plurality of raw materials held in stock, and a wastage of material due to the incomplete use of the sections, the lengths of which in the raw state are obviously not an exact multiple of the length of the beams to be cut from them.

A structure according to the first part of present claim 1 is known e.g. from DE-C-861 394 or WO-A-8 600 268.

The object of the present invention is to provide a structure which is free of the aforesaid drawbacks of structures of known type.

Said object is attained according to the present invention by a lattice structure, particular for a motor vehicle body, of the type comprising a plurality of beam elements and a plurality of nodes in which said beam elements are joined rigidly together, in at least some of said nodes a first continuous beam element being joined to second beam elements lying substantially in a plane orthogonal to said first beam element, characterised by comprising at least one structural element housed in a cavity in said first beam element and being fixed rigidly therein, said structural element comprising at least one wall substantially parallel to said plane orthogonal to said first beam element.

The present invention will be more apparent from the description of a preferred embodiment thereof given hereinafter with reference to the accompanying drawings in which:

Figure 1 is a partial perspective view of a structure constructed in accordance with the present invention;

Figures 2, 3 and 4 are perspective views of details of the structure of Figure 1 to an enlarged scale.

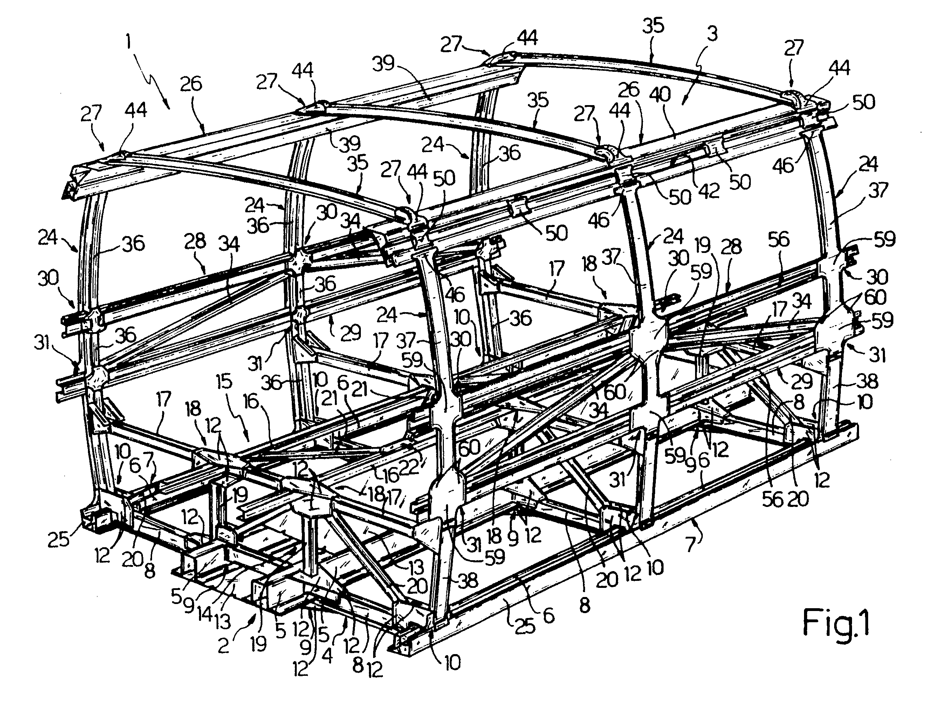

In Figure 1 the reference numeral 1 indicates overall a lattice structure for a motor bus body. The structure 1 comprises a substructure 2 which gives the structure 1 its necessary mechanical resistance, particularly to torsional stresses, and a superstructure 3 of load-bearing type and arranged to form a support for an outer cladding, not shown, and for the vehicle windows and doors. The substructure 2 comprises a lower flat truss 4 of substantially horizontal extension with rectangular frame spaces, and consisting of a pair of omega-shaped central longitudinal members 5, a plurality of longitudinal side beams 6 forming the inner ribbing of a pair of side longitudinal members 7 of the structure 1, and a plurality of omega-shaped transverse beams 8 connecting the longitudinal members 5 together and to the longitudinal side beams 6. The joints between the transverse beams 8 and central longitudinal members 5, defining respective lower central nodes 9 of the substructure 2, and the joints between the transverse beams 8 and side beams 6, defining respective lower side nodes 10 of the substructure 2, are formed in known manner by welding, using gussets and reinforcements 12 of conventional shape and arrangement. Two sheet metal walls 13 are welded respectively above and below the central longitudinal members 5 to define a box structure 14 therewith.

The substructure 2 also comprises an upper flat truss 15 consisting of a pair of central C-shaped longitudinal members 16 positioned substantially on the vertical line through the central longitudinal members 5, and of a plurality of transverse beams 17 which connect the central longitudinal members 16 together and to the superstructure 3. The transverse beams 17 are joined to the longitudinal members 5 at upper central nodes 18 of the substructure 2 which are positioned substantially on the vertical line through the central nodes 9 and joined to them by vertical struts 19. A plurality of diagonal beams 20 connects each upper central node 18 to a respective lower side node 10. Further diagonal beams 21 connect each node 18 of one of the longitudinal members 16 to respective central nodes 22 of each portion of the other longitudinal member 16 lying between a node 18 opposite that from which said further diagonal beams 21 commence and a node 18 adjacent to it.

The superstructure 3 comprises a plurality of side uprights 24 which are fixed lowerly, at the nodes 10, to a pair of lower lateral angle bars which are joined to the beams 6 to define said longitudinal members 7 therewith, and are also joined to the cross members 17 by side gussets 12, and fixed upperly to a pair of upper longitudinal side members 26 to define respective upper lateral nodes 27 of the superstructure 3. The side uprights 24 of each vehicle body side are joined to a pair of intermediate longitudinal side members 28, 29 at respective nodes 30, 31, and to diagonal beams 34 fixed at their ends to a node 30 and node 31 of an adjacent upright respectively. The superstructure 3 is completed by a plurality of upper cross-members 35 fixed at their opposing ends to the upper longitudinal members 26 at the nodes 27.

According to the present invention all the structural elements forming part of the structure 1 are formed by bending, starting from a small number of metal sheets of different thicknesses, and conveniently two different thicknesses.

For example, the components of the substructure 2 are conveniently formed from 3.5 mm thick sheet and the elements of the superstructure 3 from 1.5 mm thick sheet.

The uprights 24 comprise the inner omega-shaped elements 36 extending from one node to another, and a pair of outer flat elements 37, 38 spot-welded to the elements 36 to define a box structure, and extending respectively from a node 27 to a node 31, and below the node 31.

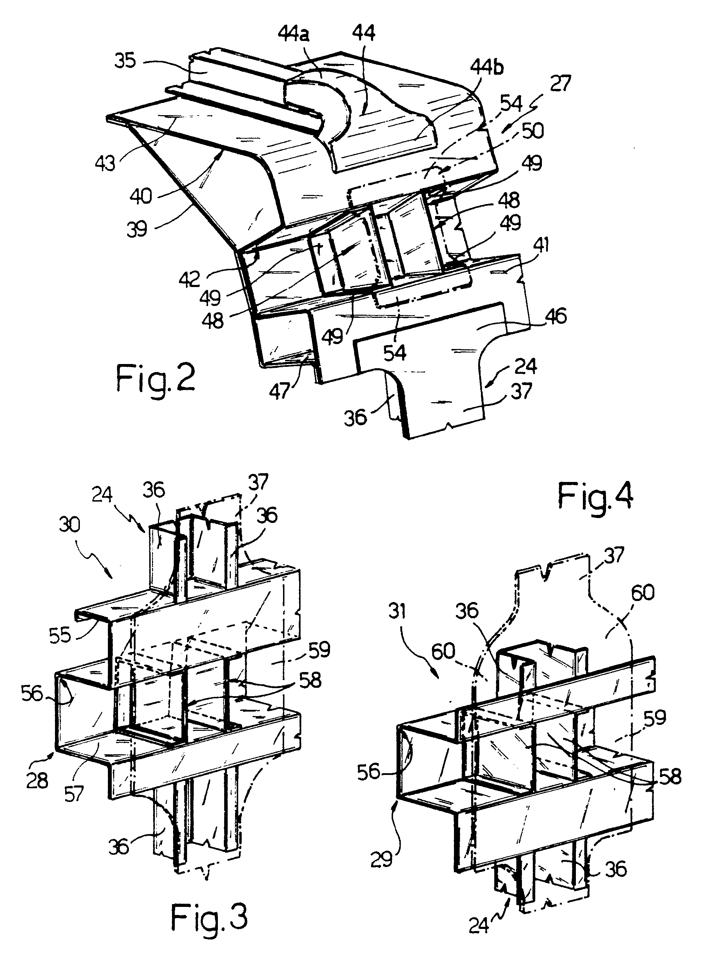

The upper longitudinal side members 26 are of double box structure, being composed of a substantially L-shaped inner element 39 and an outer substantially convex element 40, the lower flange 41 of which forms a longitudinal recess 42 of quadrangular cross-section. The element 39 and element 40 are spot-welded together along their edges and along the base of the recess 42. Figure 2 shows the construction of a node 27 in detail. The upper cross-member 35 of omega cross-section is welded to the upper flange 43 of the outer element 40 of the upper longitudinal side member 26. The front aperture in the cross-member 35 is closed by an element 44 having a portion 44a substantially of inverted-U cross-section, which is mounted over and welded to the central rib of the cross-member 35, and a connection portion 44b which reproduces the profile of the element 40 and is welded to it.

The outer element 37 of the upright 24 has an end portion 46 of increased width, this being superposed and welded on the lower flange 41 of the outer element 40 of the longitudinal member 26. The inner element 36 of the upright 24 is butt-welded to the lower flange 47 of the inner element 39 of the longitudinal member 24. In and transversely to the recess 42 there are positioned two mutually facing plates 48 which are fixed to the walls of the recess 42 by respective perimetral edges 49 which are bent in opposite directions and welded to the said walls. The plates 48 are positioned at a distance apart substantially equal to the distance between the side walls of the central ribs of the cross-member 24 and inner element 36 of the upright 24, and are substantially coplanar to them. The space between the two plates 48 is closed by a plate 50 (shown by dashed and dotted lines in Figure 2 for greater clarity) positioned on the front of the respective free sides of the plates 48 and provided with respective upper and lower edges 54 welded to the outer element 40 of the longitudinal member 26 above and below the recess 42 respectively. Analogous plates 48 with respective closure plates 49 are disposed on the longitudinal members 26 in the central regions between the various nodes 27.

Figure 3 shows in detail the construction of a node 30 for connecting an upper intermediate longitudinal member 28 to an upright 24.

The longitudinal member 28 is substantially of omega profile, with its upper flange 55 further bent to L shape, to therefore define a longitudinal recess 56 of square cross-section. Two inner elements 36 of the upright 24 are butt-welded to the L-shaped portion of the upper flange 55 and to a lower wall 57 of the recess 56. Within the recess 56 are positioned two plates 58 used for joining purposes in the manner already described for the plates 48. The node 30 is closed frontally by the outer element 37 of the upright, which widens at the node 30 to form a quadrangular plate 59.

The construction of the nodes 31 (Figure 4) is very similar to the construction of the nodes 30, and therefore only the differences will be described, using the same reference numerals to indicate identical or similar parts. Specifically, the longitudinal member 29 is of omega cross-section, and the inner elements 36 of the upright 24 are butt-welded to the upper and lower walls of the longitudinal recess 56. As is clearly visible in Figures 1 and 4, at the nodes 30 and 31 to which the diagonal beams 43 are fixed, rounded corner portions 60 of the respective plate 59 project beyond the beams which enter the nodes, in order to form a support for an end portion of the diagonal beams 34.

The advantages of the structure formed in accordance with the present invention are apparent from its characteristics. The plates 48 and 49 positioned in the recesses 42, 56 of the longitudinal members 26, 28 and 29 substantially in the same plane as the side walls of the ribs of the inner elements 36 of the uprights 24 provide the uprights 24 with a structural continuity which also includes the regions of the nodes 27, 30 and 31. Consequently the longitudinal members 26, 28 and 29, which do not in these regions have to support the entire load transmitted by the uprights 24, can be constructed with a reduced thickness (and weight) for equal mechanical strength of the structure 1. It should also be noted that the structure 1 can be formed entirely from sheet metal in the form of a roll, by cutting and bending. This enables the material held in stock to be reduced to only two types of raw material, and specifically to sheet metal rolls of two different thicknesses, with reduction in scrap and a considerable simplification of the production cycles.

Finally, it is apparent that modifications can be made to the described structure 1. In particular, the arrangement and number of the various elements of the structure 1 can vary, as can their profile and the shape of the structure itself. These elements can also be at least partly formed from structural sections of conventional type.

## Claims

1. A lattice structure, particularly for a motor vehicle body, of the type comprising a plurality of beam elements and a plurality of nodes in which said beam elements are joined rigidly together, in at least some of said nodes a first continuous beam element being joined to second beam elements lying substantially in a plane orthogonal to said first beam element, characterised by comprising at least one structural element (48, 58) housed in a cavity (42, 56) in said first beam element (26, 28, 29) and being fixed rigidly therein, said structural element (48, 58) comprising at least one wall substantially parallel to said plane orthogonal to said first beam element (26, 28, 29).

2. A structure as claimed in claim 1, characterised in that said first beam element (26, 28, 29) is a longitudinal member provided with a continuous longitudinal recess (42, 56) forming said cavity.

3. A structure as claimed in claim 1 or 2, characterised in that said second beam elements comprise two portions (36) of an upright (24) of said structure (1).

4. A structure as claimed in claim 1 or 2, characterised in that said second beam elements comprise a portion (36) of an upright (24) and a cross-member (35) of said structure (1).

5. A structure as claimed in one of the preceding claims, characterised in that said structural element is a plate (48, 58) housed transversely in said longitudinal recess (42, 56) of said longitudinal member (26, 28, 29) and provided with at least two edges (49) which are bent and welded to respective walls of said recess (42, 56).

6. A structure as claimed in any one of the preceding claims, characterised in that said second beam elements (35, 36) have an omega-shaped profile and are welded onto said longitudinal member (26, 28, 29) in such a manner that facing walls of each of said second beam elements (35, 36) are disposed in respective planes perpendicular to said longitudinal member (26, 28, 29).

7. A structure as claimed in claim 6, characterised by comprising at least one pair of said plates (48, 58) disposed respectively in said planes perpendicular to said longitudinal member (26, 28, 29).

8. A structure as claimed in claim 7, characterised by comprising means (58, 59) for closing at least a portion of said recess (42, 56) of the longitudinal member (26, 28, 29) lying between said pair of plates (48, 58).

9. A structure as claimed in any one of the preceding claims, characterised in that said beam elements (5, 7, 8, 24, 26, 35, 17, 28, 29) are constructed from sheet metal by shearing and bending.

10. A structure as claimed in any one of claims 1 to 8, characterised in that at least some of said beam elements (7, 24, 26) have a box structure and are constructed from sheet metal by shearing, bending and welding.

11. A structure as claimed in any one of the preceding claims, characterised by being entirely constructed from sheet metal of two different thicknesses.

## Revendications

1. Structure en treillis, en particulier pour une carrosserie de véhicule à moteur, du type comportant plusieurs éléments de poutre et plusieurs noeuds dans lesquels les dits éléments de poutre sont reliés rigidement ensemble, un premier élément de poutre continu étant relié à des seconds éléments de poutre s'étendant sensiblement dans un plan perpendiculaire au dit premier élément de poutre dans au moins certains des dits noeuds, caractérisée en ce qu'elle comporte au moins un élément structurel (48, 58) logé dans une cavité (42, 56) dans le dit premier élément de poutre (26, 28, 29) et y étant fixé rigidement, le dit élément structurel (48, 58) comportant au moins une paroi sensiblement parallèle au dit plan perpendiculaire au dit premier élément de poutre (26, 28, 29).

2. Structure selon la revendication 1, caractérisée en ce que le dit premier élément de poutre (26, 28, 29) est un élément longitudinal pourvu d'un renfoncement longitudinal continu (42, 56) formant la dite cavité.

3. Structure selon la revendication 1 ou 2, caractérisée en ce que les dits deuxièmes éléments de poutre comportent deux parties (36) d'un montant (24) de la dite structure (1).

4. Structure selon la revendication 1 ou 2, caractérisée en ce que lesdits deuxièmes éléments de poutre comportent une partie (36) d'un montant (24) et d'un élément transversal (35) de la dite structure (1).

5. Structure selon l'une quelconque des revendications précédentes, caractérisée en ce que le dit élément structurel est une plaque (48, 58) logée transversalement dans le dit renfoncement longitudinal (42, 56) du dit élément longitudinal (26, 28, 29) et pourvue d'au moins deux bords (49) qui sont pliés et soudés à des parois respectives du dit renfoncement (42, 56).

6. Structure selon l'une quelconque des revendications précédentes, caractérisée en ce que les dits deuxièmes éléments de poutre (35, 36) ont un profil en forme d'oméga et sont soudés sur le dit élément longitudinal (26, 28, 29) d'une manière telle que des parois se faisant face de chacun des dits deuxièmes éléments de poutre (35, 36) sont disposées dans des plans respectifs perpendiculaires au dit élément longitudinal (26, 28, 29).

7. Structure selon la revendication 6, caractérisée en ce qu'elle comporte au moins une paire des dites plaques (48, 58) disposées respectivement dans les dits plans perpendiculaires au dit élément longitudinal (26, 28, 29).

8. Structure selon la revendication 7, caractérisée en ce qu'elle comporte des moyens (58, 59) destinés à fermer au moins une partie du dit renfoncement (42, 56) du dit élément longitudinal (26, 28, 29) se trouvant entre la dite paire de plaques (48, 58).

9. Structure selon l'une quelconque des revendications précédentes, caractérisée en ce que les dits éléments de poutre (5, 7, 8, 24, 26, 35, 17, 28, 29) sont construits à partir de tôle par cisaillage et pliage.

10. Structure selon l'une quelconque des revendications 1 à 8, caractérisée en ce que au moins certains des dits éléments de poutre (7, 24, 26) ont une structure en forme de caisse et sont construits à partir de tôle par cisaillage, pliage et soudage.

11. Structure selon l'une quelconque des revendications précédentes, caractérisée en ce qu'elle est entièrement construite à partir de tôle de deux épaisseurs différentes.

**Patentansprüche**

1. Gitterstruktur, insbesondere für eine Kraftfahrzeugkarosserie, mit einer Anzahl von Stabelementen und einer Anzahl von Knoten, in denen die Stabelemente starr miteinander verbunden sind, wobei in wenigstens einigen der Knoten ein erstes kontinuierliches Stabelement mit zweiten Stabelementen verbunden ist, die im wesentlichen in einer zu dem ersten Stabelement senkrechten Ebene liegen, **gekennzeichnet** durch wenigstens ein Strukturelement (48, 58), das in einem Hohlraum (42, 56) in dem ersten Stabelement (26, 28, 29) angeordnet und dort starr befestigt ist, welches Strukturelement (48, 58) wenigstens eine Wand umfaßt, die im wesentlichen parallel zu der Ebene liegt, die senkrecht zu dem ersten Stabelement (26, 28, 29) verläuft.

2. Struktur gemäß Anspruch 1, dadurch **gekennzeichnet,** daß das erste Stabelement (26, 28, 29) ein langgestrecktes Teil mit einer kontinuierlichen, längsgerichteten Ausnehmung (42, 56) ist, die den Hohlraum bildet.

3. Struktur nach Anspruch 1 oder 2, dadurch **gekennzeichnet,** daß die zweiten Stabelemente zwei Abschnitte (36) eines senkrechten Stabes (24) der Struktur (1) umfassen.

4. Struktur nach Anspruch 1 oder 2, dadurch **gekennzeichnet,** daß die zweiten Stabelemente einen Abschnitt (36) eines senkrechten Stabes (24) und eine Querstrebe (35) der Struktur (1) umfassen.

5. Struktur nach einem der vorhergehenden Ansprüche, dadurch **gekennzeichnet,** daß das Strukturelement eine Platte (48, 58) ist, die in Querrichtung in der längsgerichteten Ausnehmung (42, 56) des längsgerichteten Teils (26, 28, 29) liegt und mit wenigstens zwei Kanten (49) versehen ist, die umgebogen und mit entsprechenden Wänden des Hohlraums (42, 56) verschweißt sind.

6. Struktur nach einem der vorhergehenden Ansprüche, dadurch **gekennzeichnet,** daß die zweiten Stabelemente (35, 36) ein omega-förmiges Profil aufweisen und an das längsgerichtete Bauteil (26, 28, 29) derart angeschweißt sind, daß gegenüberliegende Wände der zweiten Stabelemente (35, 36) in Ebenen liegen, die zu dem längsgerichteten Bauteil (26, 28, 29) senkrecht sind.

7. Struktur nach Anspruch 6, **gekennzeichnet** durch wenigstens ein Paar von Platten (48, 58), die in den Ebenen senkrecht zu dem längsgerichteten Bauteil (26, 28, 29) angeordnet sind.

8. Struktur nach Anspruch 7, **gekennzeichnet** durch Einrichtungen (58, 59) zum Schließen wenigstens eines Teils der Ausnehmung (42, 56) des längsgerichteten Bauteils (26, 28, 29), die zwischen dem Paar der Platten (48, 58) liegen.

9. Struktur nach einem der vorhergehenden Ansprüche, dadurch **gekennzeichnet,** daß die Stabelemente (5, 7, 8, 24, 26, 35, 17, 28, 29) aus Blech durch Scheren und Biegen hergestellt sind.

10. Struktur nach einem der Ansprüche 1 bis 8, dadurch **gekennzeichnet,** daß wenigstens einige Stabelemente (7, 24, 26) kastenförmig ausgebildet sind und aus Blech durch Scheren, Biegen und Schweißen hergestellt sind.

11. Struktur nach einem der vorhergehenden Ansprüche, dadurch **gekennzeichnet,** daß die gesamte Konstruktion aus Blech in zwei unterschiedlichen Stärken besteht.

Fig.1

Fig.2

Fig.4

Fig.3